# EUROPÄISCHE PATENTSCHRIFT

(11) **EP 2 060 449 B1**
(45) Veröffentlichungstag und Bekanntmachung des Hinweises auf die Patenterteilung: **19.05.2010**
(21) Anmeldenummer: 08168368.2
(22) Anmeldetag: 05.11.2008
(51) Int. Cl.: B60R 22/20

(54) **Haltevorrichtung für einen Gurt**
Holding device for a belt
Dispositif de fixation pour une ceinture

(30) Priorität: 16.11.2007 DE 102007054746
(43) Veröffentlichungstag der Anmeldung: 20.05.2009
(73) Patentinhaber: HS Genion GmbH, 82152 Krailing (DE)
(72) Erfinder: Plettrichs, Peter, 86854 Amberg (DE)
(74) Vertreter: Patentanwaltskanzlei WILHELM & BECK

(56) Entgegenhaltungen:
- EP-A- 0 636 522
- DE-A1- 3 305 955
- DE-A1- 3 541 179
- DE-U1- 20 000 867
- DE-U1- 29 608 035
- GB-A- 2 247 608

## Beschreibung

Die Erfindung betrifft eine Haltevorrichtung für einen Gurt gemäß Patentanspruch 1.

Haltevorrichtungen für Gurte werden beispielsweise in Fahrzeugen verwendet, um den Fahrzeuggurt in einem Fahrzeug in der Höhenposition variabel an der Fahrzeugkarosserie zu haltern.

Aus der gattungsgemässen DE 3541179 C2 ist eine Vorrichtung zum stufenlosen Verstellen eines Verankerungspunktes für einen Sicherheitsgurt bekannt. Die Vorrichtung, die insbesondere für einen elektrisch verstellbaren Umlenkbeschlag eines Sicherheitsgurtes ausgebildet ist, weist ein verzahntes Gleitstück auf, das ab einer vorbestimmten Belastung in eine ortsfeste Verzahnung eines lastübertragenden Profils verlagerbar und in Eingriff bringbar ist. Das Gleitstück ist über eine das Gleitstück durchdringende Gewindespindel und eine im Gleitstück integrierte Mutter innerhalb eines doppel-c-förmigen und entlang seiner freien Enden mit einer Verzahnung versehenen Profils sowohl in Längsrichtung verfahrbar als auch in der nicht verrasteten Höhenposition festhaltbar gelagert. Die Gewindespindel ist oben und unten in Lagern gelagert, die in Richtung der Verzahnung gegen die Kraft von Federn entlang Löchern des Profils verschiebbar angeordnet sind.

Weiterhin ist aus DE 3218640 A1 eine Vorrichtung zum Befestigen eines Teils an einem Verankerungspunkt bekannt. Die Vorrichtung ist für einen Sicherheitsgurt eines Fahrzeuges vorgesehen, wobei ein plötzlicher Stoß oder Zug an dem Gurtschloss dämpfend abgefangen wird. Um das Gurtschloss zwar am Verankerungspunkt zu befestigen, nicht aber in einer einfachen starren Weise, sondern derart, dass das Schloss beweglich ist und dennoch bei Auftreten einer plötzlichen Krafteinwirkung wie starr an der Verankerung gehalten wird, ist am Verankerungspunkt ein Rohrstück fest angebracht, in welchem eine das Gurtschloss haltende Schlossstange gegen einen Widerstand verschiebbar angeordnet ist. Die Schlossstange ist außerdem an einer leicht brechbaren ersten Sicherheitseinrichtung befestigt. Weiterhin ist ein Keil vorgesehen, der über eine zweite Sicherheitseinrichtung mit der Schlossstange verbunden ist. Zwischen dem Keil und der Schlossstange ist eine rampenartige Kontur ausgebildet, die dafür sorgt, dass bei einem Unfall, bei dem die erste Sicherheitseinrichtung bricht, auch die zweite Sicherheitseinrichtung bricht und das Rohrstück gegenüber dem Keil verschoben wird. Aufgrund der Rampenartigen Kontur werden der Keil und die Schlossstange nach Außen gegen das Rohrstück geklemmt, sodass eine Verschiebung des Rohrstückes begrenzt wird. Bei einer normalen, langsamen Bewegung der Schlossstange ist die Schlossstange gegenüber dem Rohrstück verschiebbar. Erst bei einer abrupten Beschleunigung der Schlossstange bricht die zweite Sicherheitseinrichtung und der Keil und die Schlossstange werden im Rohrstück verklemmt.

Die Aufgabe der Erfindung besteht darin, eine verbesserte Haltevorrichtung für einen Gurt eines Fahrzeuges bereitzustellen.

Die Aufgabe der Erfindung wird durch die Haltevorrichtung gemäß Patentanspruch 1 gelöst.

Weitere vorteilhafte Ausführungsformen der Erfindung sind in den abhängigen Ansprüchen angegeben.

Ein Vorteil der Haltevorrichtung besteht darin, dass eine flexible Einstellung der Höhenposition des Halteelementes, das den Gurt hält oder führt, möglich ist und zudem das Halteelement bei einem Unfall sicher an der Führungsschiene verrastet.

Diese Aufgabe wird dadurch gelöst, dass das Halteelement in der Führungsschiene verschiebbar angeordnet ist, wobei das Halteelement zwei Teilstücke aufweist. Ein erstes Teilstück steht mit einem Betätigungsmittel in Verbindung, über das die Höhenposition des ersten Teilstückes festgelegt wird. Das zweite Teilstück weist Rastmittel auf, die Rastausnehmungen der Führungsschiene zugeordnet sind. Zudem sind das erste und das zweite Teilstück über ein Wirkverbindungsmittel miteinander verbunden, das bei einer abrupten Beschleunigung des zweiten Teilstückes oder ab einer festgelegten Krafteinwirkung auf das zweite Teilstück wenigstens teilweise gelöst wird, sodass das zweite Teilstück eine relative Bewegung gegenüber dem ersten Teilstück ausführt. Desweiteren ist ein Wirkmittel zwischen dem ersten und zweiten Teilstück vorgesehen, das beim Lösen des Wirkverbindungsmittels das zweite Teilstück in Richtung auf die Rastausnehmungen bewegt, sodass das Rastmittel in eine Rastausnehmung einrasten kann.

In einer bevorzugten Ausführungsform ist das Wirkverbindungsmittel in Form einer Sollbruchstelle ausgebildet. Die Sollbruchstelle ist in der Weise festgelegt, dass bei Überschreiten einer Mindestkraft, die auf das zweite Teilstück einwirkt, die Sollbruchstelle bricht und sich das zweite Teilstück vom ersten Teilstück löst. Die Sollbruchstelle kann beispielsweise in Form eines Zapfens, eines Steges, eines Stiftes oder einer Leiste ausgebildet sein.

In einer weiteren Ausführungsform ist das Wirkverbindungsmittel als lösbares Rastmittel ausgebildet.

Weiterhin kann es vorteilhaft sein, das Wirkverbindungsmittel in Form eines Magnetsystems, auszubilden.

In einer weiteren Ausführungsform ist das Wirkverbindungsmittel in Form eines Federelementes ausgebildet, das das erste und das zweite Teilstück im Normalbetrieb aneinander koppelt und bei einer entsprechenden Kraft auf das zweite Teilstück eine merkliche Relativbewegung zwischen dem ersten und dem zweiten Teilstück erlaubt.

In einer weiteren vorteilhaften Ausführungsform ist das Wirkmittel in Form einer Gleitebene ausgebildet, die zwischen dem ersten und dem zweiten Teilstück angeordnet ist, wobei die Gleitebene in Richtung auf die Rastausnehmungen geneigt angeordnet ist.

In einer weiteren bevorzugten Ausführungsform sind zwei parallele Reihen von Rastausnehmungen vorgesehen und das zweite Teilstück weist zwei parallel angeordnete Rastmittel auf, wobei jeweils ein Rastmittel einer Reihe von Rastausnehmungen zugeordnet ist. Auf diese Weise wird eine symmetrische Verrastung des zweiten Teilstückes ermöglicht. Damit kann die Bewegung des zweiten Teilstückes sicher abgefangen werden.

In einer weiteren Ausführungsform ist ein Federelement vorgesehen, das das Rastmittel auf Abstand von der Rastseite hält, wobei bei einem Lösen des Wirkverbindungsmittels aufgrund des Wirkmittels das Rastmittel entgegen der Vorspannkraft des Federelementes in eine Rastausnehmung bewegt wird. Das Vorsehen des Federelementes bietet eine einfache und sichere Möglichkeit, das Halteelement in der Führungsschiene verschiebbar zu führen und die Möglichkeit des Einrastens in die Rastausnehmung mit Hilfe eines einfachen Aufbaus zu ermöglichen.

In einer weiteren Ausführungsform sind die zwei Rastmittel einstückig ausgebildet. Auf diese Weise ist eine einfache und kostengünstige Herstellung der Rastmittel und eine einfache Montage der zwei Rastmittel möglich.

In einer weiteren Ausführungsform ist das Rastmittel einteilig am zweiten Teilstück ausgebildet. Damit ist eine kostengünstige Herstellung des Rastmittels möglich, wobei eine Montage und Befestigung des Rastmittels am zweiten Teilstück entfällt. In einer weiteren bevorzugten Ausführungsform weisen jeweils das erste und das zweite Teilstück ein Hebelmittel auf. Durch die das Hebelmittel ist eine reibungsarme Bewegung des zweiten Teilstückes bei einem Lösen des Wirkverbindungsmittels in Richtung auf die Rastausnehmungen möglich.

Die Erfindung wird im Folgenden anhand der Figuren näher erläutert. Es zeigen
Figur 1 eine schematische Darstellung eines Fahrzeuges mit einem Sitz und einem Sicherheitsgurt,
Figur 2 eine Haltevorrichtung,
Figur 3 die Haltevorrichtung in Seitenansicht,
Figur 4 einen Querschnitt durch die Haltevorrichtung,
Figur 5 einen Querschnitt durch eine weitere Ausführungsform,
Figur 6 A bis H schematische Darstellungen des Halteelementes,
Figur 7 ein Halteelement mit einem weiteren Wirkverbindungsmittel,
Figur 8 ein Halteelement mit einer dritten Ausführungsform des Wirkverbindungsmittels,
Figur 9 ein Halteelement mit einer vierten Ausführungsform des Wirkverbindungsmittels,
Figur 10 eine weiteren Ausführungsform eines Halteelementes,
Figur 11 eine zusätzliche Ausführungsform eines Halteelementes,
Figur 12 ein Halteelement mit einem weiteren Wirkmittel und
Figur 13 ein Halteelement mit einem weiteren Wirkmittel.

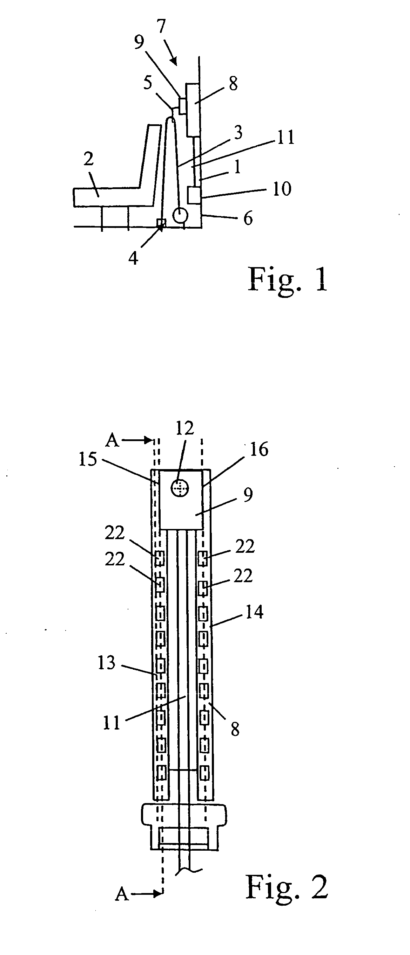

Figur 1 zeigt in einer schematischen Darstellung einen Teil einer Fahrzeugkarosserie 1 mit einem Sitz 2, wobei ein Sicherheitsgurt 3 vorgesehen ist. Der Sicherheitsgurt 3 ist mit einem ersten Endpunkt 4 fest an der Karosserie befestigt. Der Sicherheitsgurt 3 ist über eine Umlenkschnalle 5 zu einer Aufwickelrolle 6 geführt. Die Aufwickelrolle 6 ist wiederum an der Fahrzeugkarosserie 1 befestigt. In der Aufwickelrolle 6 ist ein Teil des Sicherheitsgurtes 3 unter einer Federspannung aufgerollt und kann durch ein Anziehen am Sicherheitsgurt 3 ausgegeben werden. Die Umlenkschnalle 5 ist an einer Haltevorrichtung 7 befestigt, die wiederum an der Fahrzeugkarosserie 1 angebracht ist. Die Haltevorrichtung 7 weist eine Führungsschiene 8 und ein entlang der Längsrichtung der Führungsschiene 8 beweglich gelagertes Halteelement 9 auf. Das Halteelement 9 stellt einen Schlitten dar. Die Führungsschiene 8 ist fest an der Fahrzeugkarosserie 1 befestigt. Das Halteelement 9 steht mit einem Betätigungsmittel 11 in Verbindung, das an einen Antrieb 10, beispielsweise einen elektrischen Antrieb angeschlossen ist. Über die Betätigung des elektrischen Antriebes 10 wird mit Hilfe des Betätigungsmittels 11 die Höhenposition des Halteelementes 9 und damit die Höhenposition der Umlenkschnalle 5 eingestellt. Auf diese Weise kann der Umlenkpunkt des Sicherheitsgurtes individuell an den Fahrer und an die Sitzposition angepasst werden. Das Betätigungsmittel 11 kann als Kabel, als Seil oder als Stange ausgebildet sein.

Die Höhenposition des Halteelementes 9 wird durch das Betätigungsmittel 11 und den Antrieb 10 festgelegt, wobei das Betätigungsmittel 11 und der Antrieb 10 nur für geringe Lasten auf das Halteelement 9 ausgebildet sind. Beispielsweise bei einem Unfall, bei dem eine hohe Zugkraft auf den Sicherheitsgurt 3 einwirkt und das Halteelement 9 nach unten zieht, ist die Haltekraft des Betätigungsmittels 11 zum Festhalten des Haltelements 9 nicht ausreichend. In dieser Situation ist es erforderlich, dass das Halteelement 9 über ein Rastmittel in der Führungsschiene 8 verrastet.

Figur 2 zeigt in einer vergrößerten Darstellung die Führungsschiene 8 und das Halteelement 9. Das Halteelement 9 weist ein Befestigungsmittel 12 zum Befestigen der Umlenkschnalle 5 auf, die in der gewählten Darstellung nicht dargestellt ist. Das Halteelement 9 ist in der Längsrichtung der Führungsschiene 8 verschiebbar an der Führungsschiene 8 gelagert. Das Befestigungsmittel 12 kann beispielsweise ein Schraubgewinde sein, mit dem die Umlenkschnalle 5 mit dem Haltelement 9 verschraubt werden kann.

Die Führungsschiene 8 weist in dem dargestellten Ausführungsbeispiel zwei Rastleisten 13, 14 auf, die an gegenüberliegenden Seiten der Führungsschiene 8 parallel zueinander entlang der Längsrichtung der Führungsschiene 8 angeordnet sind. In den Rastleisten 13, 14 sind Rastausnehmungen 22 eingebracht. Die Rastausnehmungen 22 einer Rastleiste 13, 14 sind entlang der Längsrichtung der Führungsschiene 8 vorzugsweise mit gleichen Abständen angeordnet. In der dargestellten Ausführungsform dienen die zwei Rastleisten 13, 14 zugleich zur axialen Führung des Halteelementes 9 in der Längsrichtung der Führungsschiene 8. Die Rastleisten 13, 14 sind durch zwei parallele Führungskanäle 15, 16 des Halteelementes 9 geführt.

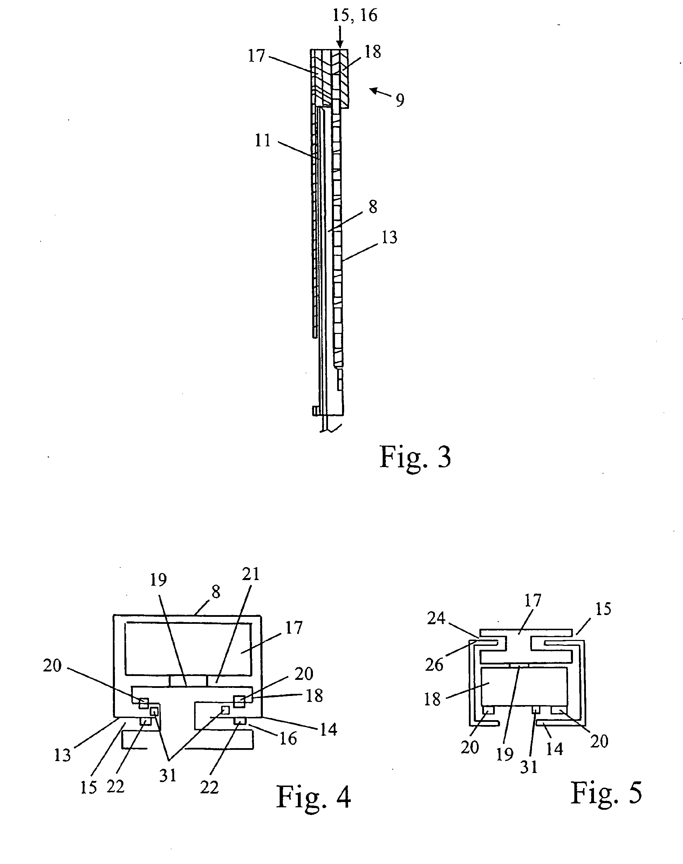

Figur 3 zeigt einen Querschnitt durch die Führungsschiene 8 und das Halteelement 9, wobei das Halteelement 9 ein erstes Teilstück 17 und ein zweites Teilstück 18 aufweist. Das erste Teilstück 17 ist in der dargestellten Ausführungsform mit dem Betätigungsmittel 11 verbunden. Das zweite Teilstück 18 weist den ersten und den zweiten Führungskanal 15, 16 auf, durch die die Rastleisten 13, 14 der Führungsschiene 8 geführt sind. Figur 4 zeigt einen Querschnitt senkrecht zur Längsrichtung der Führungsschiene 8 durch das Halteelement 9. Das erste und das zweite Teilstück 17, 18 sind über ein Wirkverbindungsmittel 19 miteinander verbunden. Das Wirkverbindungsmittel sorgt dafür, dass bei einer Verschiebung des ersten Teilstückes 17 mit Hilfe des Betätigungsmittels 11 auch das zweite Teilstück 18 mit verschoben wird. Wird jedoch eine erhöhte Kraft auf das zweite Teilstück 18 ausgeübt, die beispielsweise bei einem Unfall über den Sicherheitsgurt 3 auf das zweite Teilstück 18 übertragen wird, so wird das Wirkverbindungsmittel mindestens teilweise gelöst, sodass das zweite Teilstück 18 eine Relativbewegung nach unten gegenüber dem ersten Teilstück 17 ausführen kann. Das Wirkverbindungsmittel kann beispielsweise in Form einer Sollbruchstelle ausgebildet sein.

Das zweite Teilstück 18 weist ein Rastmittel 20 auf, das wenigstens einer Rastleiste 13, 14 zugeordnet ist. Abhängig von der gewählten Ausführungsform kann die Führungsschiene 8 auch nur eine einzige Rastleiste 13, 14 aufweisen. Weiterhin ist ein Wirkmittel 21 zwischen dem ersten und dem zweiten Teilstück 17, 18 vorgesehen, das bei einem Lösen des Wirkverbindungsmittels 19 und bei einer Relativbewegung des zweiten Teilstückes 18 nach unten gegenüber dem ersten Teilstück 17 das Rastmittel 20 in Richtung auf die Rastleiste 13, 14 bewegt und das Rastmittel 20 in eine Rastausnehmung 22 einrastet.

Die Führungsschiene 8 weist im Wesentlichen einen C-förmigen Querschnitt auf. Innerhalb der Führungsschiene 8 ist das erste Teilstück 17 angeordnet, das über das Wirkverbindungsmittel 19 mit dem zweiten Teilstück 18 verbunden ist. In den ersten und den zweiten Führungskanal 15, 16 des zweiten Teilstückes 18 greifen die nach innen geführten Seitenkanten der Führungsschiene 8 ein, die die Rastleisten 13, 14 darstellen. Das zweite Teilstück 18 weist im Bereich der Führungskanäle 15, 16 die Rastmittel 20 auf, die in Richtung auf die Rastleisten 13, 14 ausgerichtet sind. Die Rastmittel 20 sind innerhalb der Führungsschiene 8 angeordnet. Zudem ist zwischen dem ersten und dem zweiten Teilstück das Wirkmittel 21 vorgesehen, das bei einer Relativbewegung des zweiten Teilstückes 18 gegenüber dem ersten Teilstück 17 das zweite Teilstück 18 in Richtung auf die Rastleisten 13, 14 bewegt, sodass die Rastmittel 20 in Rastausnehmungen 22 eingreifen.

In dem dargestellten Ausführungsbeispiel wird die Führung des Halteelementes 9 durch die Rastleisten 13, 14 ausgeführt, die in den Führungskanälen 15, 16 des Halteelementes 9 geführt sind.

Figur 5 zeigt einen Querschnitt durch eine weitere Ausführungsform, bei der die Führung des Halteelementes 9 über weitere Führungskanäle 24, 25 erreicht werden. In dieser Ausführungsform weist die Führungsschiene 8 weitere Führungsleisten 26, 27 auf, die in die weiteren Führungskanäle 24, 25 hineinragen. In dieser Ausführungsform können die Rastleisten 13, 14 auch vor dem zweiten Teilstück 18 angeordnet sein, ohne in das zweite Teilstück 18 eingreifen zu müssen. Die Rastmittel 20 des zweiten Teilstückes 18 sind auch in dieser Ausführungsform den Rastleisten 13, 14 zugewandt.

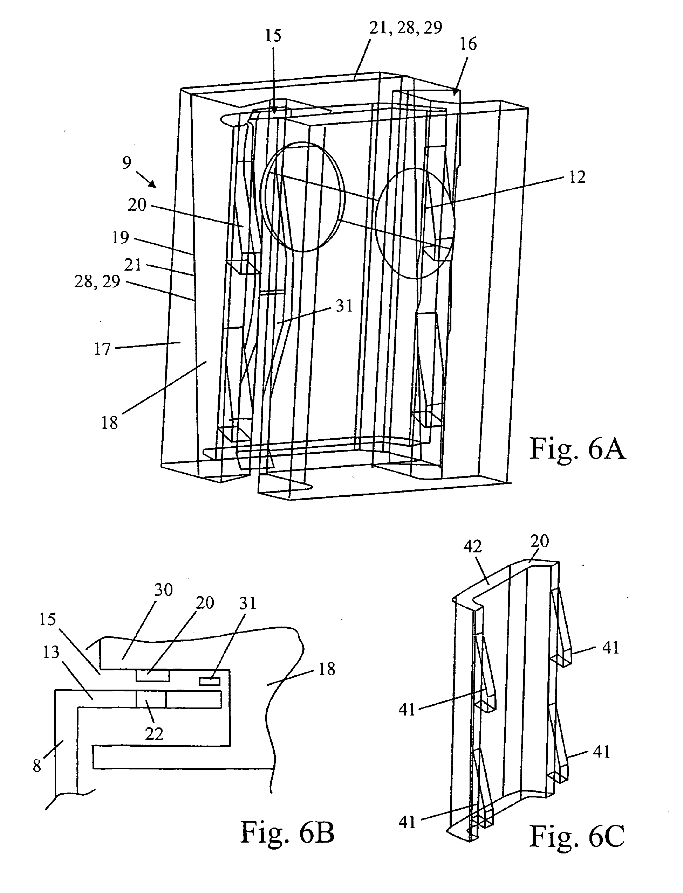

Figur 6A zeigt eine Ausführungsform eines Halteelementes 9, das ein erstes und ein zweiten Teilstück 17, 18 aufweist. Das erste und das zweite Teilstück 17, 18 sind über ein Wirkverbindungsmittel 19 miteinander verbunden. Zudem ist zwischen dem ersten und dem zweiten Teilstück 17, 18 ein Wirkmittel 21 in Form zweier paralleler Flächen 28, 29 ausgebildet. Die erste Fläche 28 ist auf einer Vorderseite des ersten Teilstücks 17 ausgebildet. Die zweite Fläche 29 ist auf einer Rückseite des zweiten Teilstückes 18 ausgebildet. Abhängig von der gewählten Ausführungsform können die erste und/oder die zweite Fläche 28, 29 einen Teil der entsprechenden Fläche des erste und/oder des zweiten Teilstückes 17, 18 bedecken. In dem gewählten Ausführungsbeispiel erstreckt sich die erste Fläche 28 über die gesamte Vorderseite des ersten Teilstückes 17. Die zweite Fläche 29 erstreckt sich über die gesamte Rückseite des zweiten Teilstückes 18. Im zweiten Teilstück 18 sind der erste und der zweite Führungskanal 15, 16 an gegenüberliegenden Seitenflächen des zweiten Teilstückes 18 eingebracht. Die Führungskanäle 15, 16 weisen im Querschnitt eine Rechteckform auf, wobei sich die Führungskanäle 15, 16 von einer Unterseite bis zu einer Oberseite des zweiten Teilstückes 18 erstrecken. Die Führungskanäle 15, 16 sind parallel zueinander angeordnet und geben die Führungsrichtung durch die Führungsschiene 8 für das Halteelement 9 vor. Die erste und die zweite Fläche 28, 29 sind in einem Winkel ungleich 90° zur Ausrichtung der Führungskanäle 15, 16 angeordnet. Beispielsweise kann der Winkel zwischen dem Flächenpaar 28, 29 und den Führungskanälen 15, 16 zwischen 3° und 80° liegen.

Figur 6B zeigt einen Querschnitt durch einen Teil des zweiten Teilstückes 18 im Bereich des ersten Führungskanals 15. In dieser Darstellung ist die erste Rastleiste 13 im montierten Zustand dargestellt, in dem die erste Rastleiste 13 in den ersten Führungskanal 15 hineinragt. Im ersten Führungskanal 15 weist das zweite Teilstück 18 auf einer Vorderseite 30 ein Rastmittel 20 auf, das der ersten Rastleiste 13 zugewandt ist. Zudem ist zwischen der ersten Rastleiste 13 und der Vorderseite 30 ein Federelement 31 angeordnet, das das Rastmittel 20 auf Abstand von der ersten Rastleiste 13 hält. Das Rastmittel 20 ist beispielsweise in Form wenigstens eines Rastzahnes ausgebildet. Abhängig von der gewählten Ausführungsform ist auch im zweiten Führungskanal 16 ein Rastmittel 20 und ein Federelement 31 angeordnet, wobei dieses Rastmittel 20 der zweiten Rastleiste 14 zugewandt ist. Abhängig von der gewählten Ausführungsform kann auch auf das Federelement 31 verzichtet werden.

Am zweiten Teilstück 18 ist im montierten Zustand über die Umlenkschnalle 5 der Sicherheitsgurt 3 gehaltert. Wird nun beispielsweise bei einem Unfall eine Belastung auf den Sicherheitsgurt 3 ausgeübt, so wird das zweite Teilstück 18 nach unten beschleunigt, wobei das erste Teilstück 17 vom Betätigungsmittel 11 gehalten wird. Dabei wird das Wirkverbindungsmittel 19 gelöst und das zweite Teilstück 18 gleitet über die erste und die zweite Fläche 28, 29 nach unten und in Richtung auf die erste und die zweite Rastleiste 13,14. Dabei wird die Federkraft des Federelementes 31 überwunden und das Rastmittel 20 auf die erste und/oder die zweite Rastleiste 13, 14 gedrückt. Das Rastmittel 20 greift in eine Rastausnehmung 22 ein und ein weiteres Verschieben des zweiten Teilstückes 18 nach unten und damit des Umlenkpunktes für den Sicherheitsgurt 3 wird verhindert.

Das Halteelement 9 weist sowohl ein Rastmittel 20 im ersten als auch im zweiten Führungskanal 15, 16 auf. Die Rastmittel können einteilig oder als getrennte Bauteile ausgebildet sein. Zudem können die Rastmittel einstückig mit dem zweiten Teilstück 18 ausgebildet sein.

Figur 6C zeigt ein Ausführungsbeispiel für ein einteiliges Rastmittel 20, das zwei parallele Reihen von Rastnasen 41 aufweist, die zum Verrasten in Rastausnehmungen 22 der Führungsschiene 8 vorgesehen sind. Die zwei Reihen von Rastnasen 41 ragen in den ersten bzw. den zweiten Führungskanal 15, 16. Die dargestellte Ausführungsform des Rastmittels 20 besteht im Wesentlichen aus einer Platte 42 deren parallelen Längsseiten in eine Richtung umgebogen sind. An den parallelen Längsseiten sind die Rastnasen 41 ausgebildet. Das Rastmittel 20 kann in der einteiligen Ausführungsform unabhängig vom zweiten Teilstück 18 hergestellt werden und anschließend im zweiten Haltestück 18 verbaut werden. Abhängig von der gewählten Ausführungsform können jedoch auch die zwei Reihen von Rastnasen 41 einstückig am zweiten Teilstück 18 ausgebildet werden. Das Rastmittel 20 kann auch abweichend von der dargestellten Ausführungsform zweiteilig ausgebildet sein, wobei jeweils ein Teil eine Reihe von Rastnasen 41 aufweist. In einer einfachen Ausführungsform kann ein Rastmittel 20 auch nur eine einzige Rastnase 41 aufweisen.

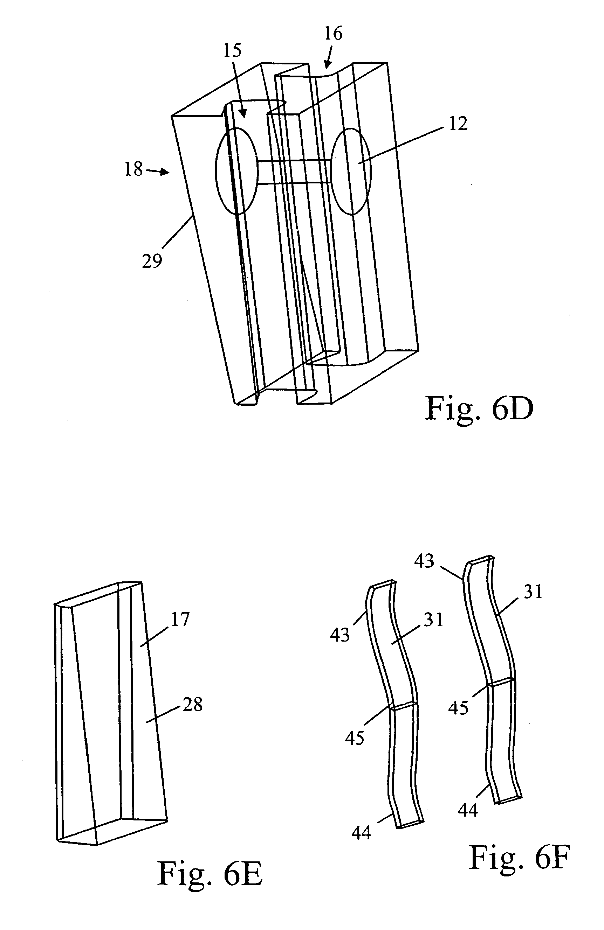

Figur 6D zeigt in einer schematischen Darstellung das zweite Teilstück 18 ohne das Rastmittel 20 und ohne das Federelement 31. In dieser Darstellung ist deutlich die geneigte zweite Fläche 29 auf der Rückseite des zweiten Teilstückes 18 und die parallel angeordneten Führungskanäle 15, 16 erkennbar.

Figur 6E zeigt in einer schematischen Darstellung das erste Teilstück 17 mit der geneigten ersten Fläche 28.

Figur 6F zeigt in einer schematischen Darstellung ein Paar von Federelementen 31, die mit einem ersten und einem dritten Anlagebereich 43, 44 am zweiten Teilstück 18 und/oder am Rastmittel 20 anliegen. Ein zweiter Anlagebereich 45, der zwischen dem ersten und dem dritten Anlagebereich angeordnet ist, ist gegen eine erste bzw. zweite Rastleiste 13, 14 der Führungsschiene 8 gespannt. Durch die gewählte Form der drei Anlagebereiche 43, 44 , 45 ist eine gute Übertragung der Federkräfte möglich. Zudem ist durch die paarweise Anordnung der zwei Federelemente 31, eine symmetrische Verteilung der Federkräfte möglich. In einer Ausführungsform ist jeweils ein Federelement 31 im ersten bzw. im zweiten Führungskanal 15, 16 angeordnet. Im montierten Zustand sind die Federelemente parallel zur Längsrichtung der Führungsschiene 8 angeordnet.

Der erste, der zweite, und der dritte Anlagebereich 43, 44, 45 des Federelementes 31 sind in Form von Biegebereichen ausgebildet, wobei die Biegungskrümmung des ersten und des dritten Anlagebereiches 43, 44 entgegen der Biegekrümmung des zweiten Anlagebereiches 45 ausgerichtet sind, sodass sich eine wellenförmige Form ergibt. Das Federelement 31 kann beispielsweise als geschwungene Blattfeder ausgebildet sein.

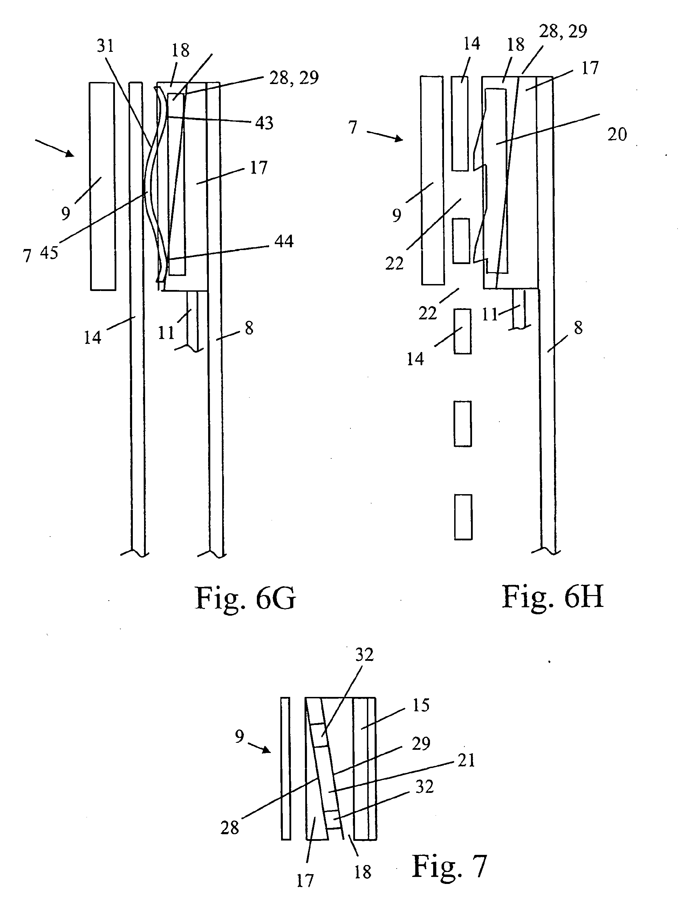

Figur 6G zeigt einen Querschnitt durch die Haltevorrichtung, wobei deutlich die Position eines Federelementes 31 zwischen dem Rastmittel 20 und/oder einer Anlagefläche des zweiten Teilstückes 18 und der zweiten Rastleiste 14 dargestellt ist. Figur 6H zeigt einen Querschnitt durch die Haltevorrichtung 7 ohne eine Darstellung der Federelemente 31.

Die Figuren 7 bis 10 zeigen verschiedene Ausführungsformen des Wirkverbindungsmittels.

Figur 7 zeigt eine weitere Ausführungsform eines Halteelementes 9, bei dem als Wirkmittel 21 eine erste und eine zweite Fläche 28, 29 vorgesehen sind und das Wirkverbindungsmittel in Form einer Sollbruchstelle 32 ausgebildet ist. Als Sollbruchstelle kann man beispielsweise ein Stift, ein Steg, oder eine Klebeverbindung vorgesehen sein. Es kann eine einzelne Sollbruchstelle oder es können auch mehrere Sollbruchstellen 32 zwischen dem ersten und zweiten Teilstück 17, 18 vorhanden sein. Die Sollbruchstellen 32 sind in der Weise ausgebildet, dass die Sollbruchstelle gelöst wird, wenn eine festgelegte Mindestkraft auf das zweite Teilstück 18 ausgeübt wird.

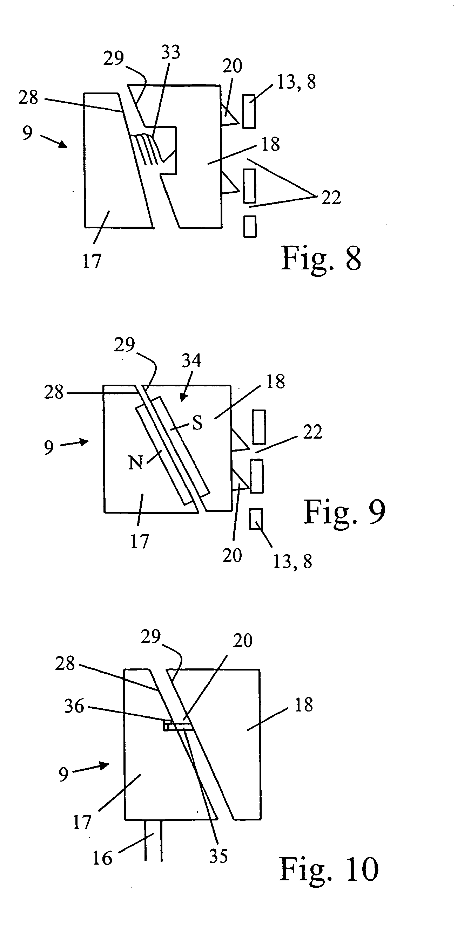

Figur 8 zeigt eine weitere Ausführungsform eines Halteelementes 9 mit einem Wirkverbindungsmittel in Form einer Haltefeder 33. Die Haltefeder 33 ist mit dem ersten und dem zweiten Teilstück 17, 18 verbunden und hält bei einer normalen Betätigung des Sicherheitsgurtes das zweite Teilstück 18 am ersten Teilstück 17 fest. Wird eine erhöhte Kraft auf den Sicherheitsgurt 3 und damit auf das zweite Teilstück 18 ausgeübt, so dehnt sich die Haltefeder 33, sodass sich das zweite Teilstück 18 gemäß dem angeordneten Wirkmittel 21 in Richtung auf die Rastleisten 13, 14 bewegt und das Rastmittel 20 in die eine Rastausnehmung 22 der Führungsschiene 8 einrastet. Die Haltefeder kann beispielsweise parallel oder senkrecht zur Längsrichtung der Führungsschiene 8 angeordnet sein. Mit Hilfe der Haltefeder kann das zweite Teilstück 18 zerstörungsfrei nach einem Lösen vom ersten Teilstück 17 bei Nachlassen der Belastung des Sicherheitsgurtes 3 wieder aus der Verrastung gelöst werden und in die Ausgangsposition zum Teilstück 17 zurück bewegt werden.

Figur 9 zeigt eine weitere Ausführungsform eines Halteelementes 9, wobei als Wirkmittel die parallelen ersten und zweiten Flächen 28, 29 ausgebildet sind. Als Wirkverbindungsmittel ist ein Magnetsystem 34 angeordnet, wobei ein Nordpol N des Magnetsystems 34 am ersten Teilstück 17 und ein Südpol S des Magnetsystems 34 am zweiten Teilstück 18 befestigt ist. Die Magnetkraft des Magnetsystems 34 ist in der Weise festgelegt, dass sich das zweite Teilstück 18 erst bei einer festgelegten Kraft und/oder Beschleunigung durch den Sicherheitsgurt 3 vom ersten Teilstück 17 löst und in Richtung auf die Rastleisten 13, 14 bewegt wird.

Figur 10 zeigt eine weitere Ausführungsform eines Halteelementes 9 mit einem Wirkverbindungsmittel in Form einer Rastverbindung. Dabei ist ein Zapfen 35 mit dem zweiten Teilstück 18 befestigt, wobei der Zapfen 35 in eine Öffnung 36 des ersten Teilstückes 17 ragt und darin verrastet ist. Bei einer normalen Betätigung des Sicherheitsgurtes 3 werden das erste und das zweite Teilstück 17, 18 über den Zapfen 35 miteinander geführt. Tritt eine erhöhte Belastung, d. h. eine erhöhte Kraft oder Beschleunigung über den Sicherheitsgurt 3 auf das zweite Teilstück 18 auf, so wird der Zapfen 35 aus der Öffnung 36 herausgezogen und das zweite Teilstück 18 in Richtung auf die erste und die zweite Rastleiste 13, 14 bewegt bis das Rastmittel 20 in einer Rastausnehmung 22 des erste und/oder der zweiten Rastleiste 13, 14 verrastet.

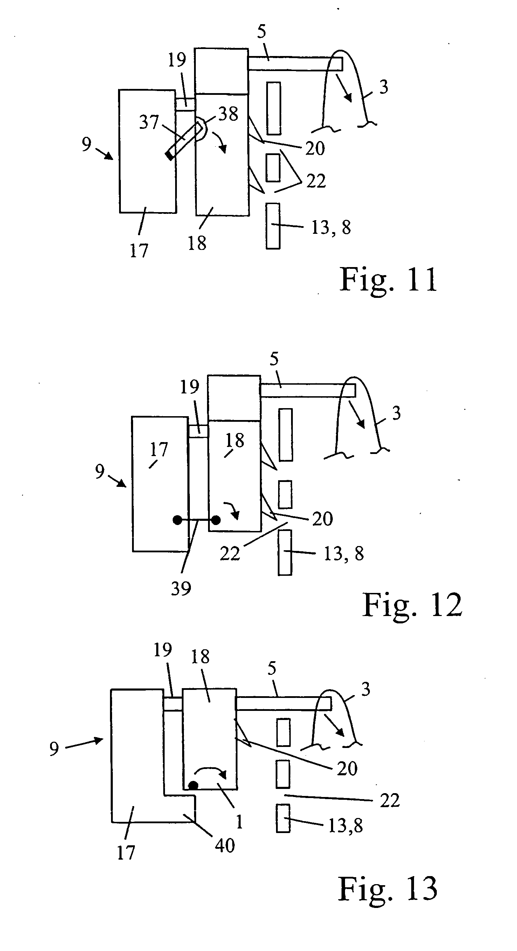

Die Figuren 11 bis 13 zeigen verschiedenen Ausführungsformen von weiteren Wirkmitteln.

In Figur 11 ist zwischen dem ersten und dem zweiten Teilstück 17, 18 eines der oben erläuterten Wirkverbindungsmittel 19 ausgebildet. Zusätzlich ist als Wirkmittel 21 ein Hebel 37 vorgesehen, der zwischen dem ersten und dem zweiten Teilstück 17, 18 angeordnet ist. Der Hebel 37 ist am ersten Teilstück 17 drehbar gelagert und greift mit einem zweiten Ende in eine Hebelöffnung 38 des zweiten Teilstückes 18 ein. Wird nun bei einer Belastung des Sicherheitsgurtes 3 das Wirkverbindungsmittel 19 gelöst, so wird das zweite Teilstück 18 über den Hebel 37 nach vorne und nach unten in Richtung auf die erste Rastleisten 13, 14 bewegt, sodass das Rastmittel 20 in die Rastausnehmung 22 eingreifen kann. Abhängig von der gewählten Ausführungsform kann der Hebel 37 auch am zweiten Teilstück 18 drehbar gelagert sein und in eine entsprechende Hebelöffnung des ersten Teilstückes 17 eingreifen.

In einer weiteren Ausführungsform wie in Fig. 12 dargestellt, ist als Wirkmittel eine starre Stange 39 vorgesehen, die mit dem ersten Teilstück 17 verbunden ist. Zudem ist das zweite Teilstück 18 drehbar an der starren Stange 39 befestigt. Wird nun eine Kraft über den Sicherheitsgurt 3 auf das zweite Teilstück 18 ausgeübt, sodass sich das Wirkverbindungsmittel 19 löst, so wird das zweite Teilstück 18 nach vorne und nach unten in Richtung auf die erste und/oder zweite Rastleiste 13, 14 geschwenkt, bis das Rastmittel 20 in eine Rastausnehmung 22 eingreift.

Figur 13 zeigt eine ähnliche Ausführungsform wie Figur 12, wobei jedoch anstelle einer starren Stange 39 eine Auflage 40 am ersten Teilstück 17 ausgebildet ist, auf dem das zweite Teilstück 18 aufsitzt. Wird nun über den Sicherheitsgurt 3 eine entsprechende Kraft auf das zweite Teilstück 18 ausgeübt, so löst sich das Wirkverbindungsmittel 19 und das zweite Teilstück 18 kippt um einen Drehpunkt nach vorne und nach unten in Richtung auf die erste Rastseite 13 bis das Rastmittel 20 in eine Rastausnehmung 22 eingreift.

Die verschiedenen dargestellten und beschriebenen Ausführungsformen der Wirkverbindungsmittel 19 und die verschiedenen Ausführungsformen der Wirkmittel 21 können in beliebiger Kombination miteinander verwendet werden.

## Patentansprüche

1. Haltevorrichtung für einen Gurt (3) eines Fahrzeuges (1) mit einer Führungsschiene (8) mit einem Halteelement (9) zum Halten des Gurtes (3), wobei die Führungsschiene (4) in verschiedenen Höhenpositionen auf einer Rastseite (13,14) Rastausnehmungen (16) aufweist, wobei das Halteelement (9) zweiteilig ausgebildet ist, wobei die zwei Teilstücke (17, 18) über ein Wirkverbindungsmittel (19) miteinander verbunden sind, wobei das zweites Teilstück (18) ein Rastmittel (20) aufweist, das der Rastseite (13, 14) zugewandt ist, wobei das zweite Teilstück (18) ausgebildet ist, um den Gurt zu halten, wobei ein Betätigungsmittel (11) vorgesehen ist, das in Wirkverbindung mit dem ersten Teilstück (17) steht, wobei über das Betätigungsmittel (11) eine Höhenposition des Halteelements (9) festlegbar ist, **dadurch gekennzeichnet, dass** zwischen dem ersten und dem zweiten Teilstück (17, 18) wenigstens ein Wirkmittel (21) vorgesehen ist, wobei bei einer festgelegten Kraft auf das zweite Teilstück (18) in einer ersten Richtung das Wirkverbindungsmittel (19) mindestens teilweise gelöst wird und das zweite Teilstück(18) eine Relativbewegung gegenüber dem ersten Teilstück (17) in die erste Richtung ausführt und aufgrund des Wirkmittels (21) in Richtung auf die Rastseite (13, 14) bewegt wird und das Rastmittel (20) in eine Rastausnehmung (22) einrastet.

2. Haltevorrichtung nach Anspruch 1, wobei das Wirkverbindungsmittel eine Sollbruchstelle (32) ist.

3. Haltevorrichtung nach Anspruch 1, wobei das Wirkverbindungsmittel ein Magnetsystem (34) ist.

4. Haltevorrichtung nach Anspruch 1, wobei das Wirkverbindungsmittel ein Federelement (33) ist.

5. Haltevorrichtung nach den Ansprüchen 1 bis 4, wobei die Führungsschiene (8) zwei parallele Reihen (13, 14) von Rastausnehmungen (22) aufweist, und wobei das zweite Teilstück (18) zwei parallel angeordnete Rastmittel (20) aufweist, die jeweils einer Reihe (13, 14) von Rastausnehmungen (22) zugeordnet sind.

6. Haltevorrichtung nach einem der Ansprüche 1 bis 5, wobei ein weiteres Federelement (31) vorgesehen ist, die das Rastmittel (20) entgegen der Rastseite (13, 14) vorspannt.

7. Haltevorrichtung nach einem der Ansprüche 1 bis 6, wobei die zwei Rastmittel (20) einstückig ausgebildet sind.

8. Haltevorrichtung nach einem der Ansprüche 1 bis 7, wobei das zweite Teilstück (18) zwei parallel angeordnete Führungskanäle (15, 16) aufweist, wobei in den Führungskanälen (15, 16) Führungsleisten (13, 14) der Führungsschiene (8) angeordnet sind, wobei in den Führungsleisten (13, 14) die Rastausnehmungen (22) angeordnet sind.

9. Haltevorrichtung nach einem der Ansprüche 1 bis 8, wobei das Rastmittel (20) einteilig mit dem zweiten Teilstück (18) ausgebildet ist.

10. Haltevorrichtung nach einem der Ansprüche 1 bis 9, wobei als Wirkmittel das erste Teilstück (17) und das zweite Teilstück (18) jeweils eine geneigte Fläche (28, 29) aufweisen, die einander zugeordnet sind.

11. Haltevorrichtung nach Anspruch 10, wobei wenigstens eine geneigte Fläche einen Winkel zwischen 5° und 80° in Bezug zur Führungsrichtung der Führungsschiene (8) aufweist.

12. Haltevorrichtung nach einem der Ansprüche 1 bis 9, wobei als Wirkmittel zwischen dem ersten und zweiten Teilstück (17, 18) ein Hebelmittel (37, 38, 39, 40) vorgesehen ist.

## Claims

1. Holding fixture for a belt (3) of a vehicle (1) comprising a guide rail (8), a holding element (9) for holding the belt (3), the guide rail (4) comprising catching recesses (16) at various levels of a catching side (13, 14), the holding element (9) having a bipartite configuration, the two segments (17, 18) being connected to each other via an operative connection means (19), the second segment (18) comprising a catching means (20) which faces the catching side (13, 14), the second segment (18) being configured to hold the belt, an actuating means (11) being provided which is actively connected to the first segment (17), whereby a level of the holding element (9) may be determined via the actuating means (11), **characterized in that** at least one acting component (21) is provided between the first and the second segment (17, 18), whereby in the case of a specified force acting upon the second segment (18) in a first direction the operative connection means (19) is at least partially released and the second segment (18) carries out a relative movement in the first direction with regard to the first segment (17) and is moved in the direction of the catching side (13, 14) due to the acting component (21) and the catching means (20) catches within the catching recess (22).

2. Holding fixture according to claim 1, the active connection means being a determined breaking point (32).

3. Holding fixture according to claim 1, the active connection means being a magnetic system (34).

4. Holding fixture according to claim 1, the active connection means being a spring element (33).

5. Holding fixture according to claims 1 to 4, the guide rail (8) comprising two parallel rows (13, 14) of catching recesses (22) and the second segment (18) comprising two catching means (20) arranged in parallel, which are each assigned to a row (13, 14) of catching recesses (22).

6. Holding fixture according to any one of claims 1 to 5, a further spring element (31) being provided which pretensions the catching means (20) against the catching side (13, 14).

7. Holding fixture according to any one of claims 1 to 6, the two catching means (20) being in one piece.

8. Holding fixture according to any one of claims 1 to 7, the second segment (18) comprising two guiding channels (15, 16) arranged in parallel, gibbings (13, 14) of the guide rail (8) being arranged within the guiding channels (15, 16), the catching recesses (22) being arranged within the gibbings (13, 14).

9. Holding fixture according to any one of claims 1 to 8, the catching means (20) being configured in one piece with the second segment (18).

10. Holding fixture according to any one of claims 1 to 9, the first segment (17) and the second segment (18) each comprise an inclined plane (28, 29) as an acting component, which are assigned to each other.

11. Holding fixture according to claim 10, at least one inclined plane having an angle of 5° to 80° with regard to the guiding direction of the guide rail (8).

12. Holding fixture according to any one of claims 1 to 9, a lever means (37, 38, 39, 40) being provided as an acting component between the first and the second segment (17, 18).

## Revendications

1. Dispositif de retenue pour une ceinture (3) d'un véhicule (1), comprenant un rail de guidage (8) avec un élément de retenue (9) pour retenir la ceinture (3), le rail de guidage (4) présentant des évidements d'encliquetage (16) dans différentes positions en hauteur sur un côté d'encliquetage (13, 14), l'élément de retenue (9) étant réalisé en deux parties, les deux pièces partielles (17, 18) étant connectées l'une à l'autre par le biais d'un moyen de liaison fonctionnelle (19), la deuxième pièce partielle (18) présentant un moyen d'encliquetage (20), qui est tourné vers le côté d'encliquetage (13, 14), la deuxième pièce partielle (18) étant réalisée pour retenir la ceinture, un moyen d'actionnement (11) étant prévu, lequel est en liaison fonctionnelle avec la première pièce partielle (17), une position en hauteur de l'élément de retenue (9) pouvant être fixée par le biais du moyen d'actionnement (11), **caractérisé en ce que** l'on prévoit entre la première et la deuxième pièce partielle (17, 18) au moins un actionneur (21), le moyen de liaison fonctionnelle (19) étant au moins en partie libéré lorsqu'une force prédéterminée est appliquée sur la deuxième pièce partielle (18) dans une première direction, et la deuxième pièce partielle (18) effectuant un mouvement relatif par rapport à la première pièce partielle (17) dans la première direction et étant déplacée sous l'action de l'actionneur (21) dans la direction du côté d'encliquetage (13, 14), et le moyen d'encliquetage (20) s'encliquetant dans un évidement d'encliquetage (22).

2. Dispositif de retenue selon la revendication 1, dans lequel le moyen de liaison fonctionnelle est un point destiné à la rupture (32).

3. Dispositif de retenue selon la revendication 1, dans lequel le moyen de liaison fonctionnelle est un système d'aimant (34).

4. Dispositif de retenue selon la revendication 1, dans lequel le moyen de liaison fonctionnelle est un élément de ressort (33).

5. Dispositif de retenue selon les revendications 1 à 4, dans lequel le rail de guidage (8) présente deux rangées parallèles (13, 14) d'évidements d'encliquetage (22), et dans lequel la deuxième pièce partielle (18) présente deux moyens d'encliquetage (20) disposés parallèlement, qui sont associés à chaque fois à une rangée (13, 14) d'évidements d'encliquetage (22).

6. Dispositif de retenue selon l'une quelconque des revendications 1 à 5, dans lequel un autre élément de ressort (31) est prévu, lequel précontraint le moyen d'encliquetage (20) contre le côté d'encliquetage (13, 14).

7. Dispositif de retenue selon l'une quelconque des revendications 1 à 6, dans lequel les deux moyens d'encliquetage (20) sont réalisés d'une seule pièce.

8. Dispositif de retenue selon l'une quelconque des revendications 1 à 7, dans lequel la deuxième pièce partielle (18) présente deux canaux de guidage disposés en parallèle (15, 16), des nervures de guidage (13, 14) du rail de guidage (8) étant disposées dans les canaux de guidage (15, 16), les évidements d'encliquetage (22) étant disposés dans les nervures de guidage (13, 14).

9. Dispositif de retenue selon l'une quelconque des revendications 1 à 8, dans lequel le moyen d'encliquetage (20) est réalisé d'une seule pièce avec la deuxième pièce partielle (18).

10. Dispositif de retenue selon l'une quelconque des revendications 1 à 9, dans lequel la première pièce partielle (17) et la deuxième pièce partielle (18) présentent en tant qu'actionneur, à chaque fois une surface inclinée (28, 29), lesquelles surfaces sont associées l'une à l'autre.

11. Dispositif de retenue selon la revendication 10, dans lequel au moins une surface inclinée présente un angle compris entre 5° et 80° par rapport à la direction de guidage du rail de guidage (8).

12. Dispositif de retenue selon l'une quelconque des revendications 1 à 9, dans lequel un moyen de levier (37, 38, 39, 40) est prévu en tant qu'actionneur entre la première et la deuxième pièce partielle (17, 18).
